# EUROPEAN PATENT APPLICATION

(11) **EP 2 163 160 A1**
(43) Date of publication of application: **17.03.2010**
(21) Application number: 08015711.8
(22) Date of filing: 05.09.2008
(51) Int. Cl.: A23J 7/00, C11B 1/10

(54) **Composition richly containing polar lipid and method of manufacturing the same**

(71) Applicant: Meggle Japan Co., Ltd., 15-4, Ginza 1-chome Chuo-ku Tokyo (JP)
(72) Inventor: The designation of the inventor has not yet been filed
(74) Representative: Böhm, Brigitte

(57) **Abstract**

Provided is a composition containing little triglyceride (TG) or cholesterol, which contains a high content of polar lipid such as phospholipid (PL) and sphingolipid prepared from raw materials derived from milk. Also provided is a method of manufacturing the composition from materials derived milk containing polar lipids such as phospholipid (PL) .and sphingolipid, comprising performing supercritical extraction with carbon dioxide used as a supercritical fluid and ethanol added as an entrainer at an ethanol concentration and/or extraction temperature adjusted in a stepwise fashion. The present invention allows efficient production of a composition containing little triglyceride (TG) or cholesterol and richly containing polar lipid such as phospholipid (PL) and sphingolipid, and further fractionation of some polar lipids.

## Description

### TECHNICAL FIELD

The present invention relates to methods of manufacturing compositions richly containing phospholipids and sphingolipids, which are polar lipids derived from milk, using a supercritical extraction technology, and to compositions richly containing polar lipids. Compositions richly containing polar lipids according to the present invention may be widely used in the fields of: food products such as functional foods, breastmilk substitutes, and high density liquid diets; pharmaceuticals such as enteral nutrients and substrates for drug delivery systems; animal feed for domestic/companion animals and cultured fish; as well as cosmetics and chemical products.

### BACKGROUND ART

In compositions richly containing polar lipids, soybean lecithin and egg yolk lecithin as phospholipid compositions derived from natural products, are generally widely used for emulsifiers, etc., in manufacturing food products. In recent years, phosphatidylserines (PS) provided by enzymatic treatment of phosphatidylcholines (PC) of soybean lecithin and serine, and phospholipids derived from marine products, including polyunsaturated fatty acids such as docosahexaenoic acid (DHA) have been used in functional foods. It has been also reported and noted that milk richly contains: glycerophospholipids such as phosphatidylcholine (PC), phosphatidylethanolamine (PE), phosphatidylserine (PS), phosphatidylinositol (PI), and plasmalogen-type PE; sphingophospholipids such as sphingomyelin (SM); and sphingoglycolipids such as glucosylceramide (GlcCer), lactosylceramide (LacCer), and ganglioside, and that these polar lipids have various physiological functions such as cerebral nerve functions, motor functions, cell differentiation/apoptosis, immunological functions, phylactic functions, and antiobesitic functions including inhibition of accumulation of visceral fat.

In addition, recently, functional researches on phospholipids and sphingolipids constituting the cell membranes of animals and plants as a microdomain have been pursued, and there has been a growing interest in their relations with signaling, induced differentiation/apoptosis of cells, etc.

General methods of preparing phospholipids include an extraction method using an organic solvent. Soybean lecithin (phospholipid) is prepared by, for example, a method of extracting raw oil from soybean flakes with an organic solvent such as hexane, followed by drying oil cake generated in a degumming process to obtain a crude phospholipid fraction. Egg yolk lecithin (phospholipid) is prepared by, for example, a method of using an organic solvent such as ethanol, propanol, or dimethyl ether to extract crude fat from yolk powder and using acetone to obtain a crude phospholipid fraction (Journal of Japan Oil Chemists' Society, 41(9), (1992), 211).

In addition, phospholipid derived from milk is extracted/fractionated from powder containing polar lipid such as buttermilk powder, butter serum powder, or a whey protein concentrate, using an organic solvent such as chloroform, methanol, ether, acetone, hexane, ethanol, or diethyl ether (Japanese Patent Laid-Open No. 1991-47192). Further examples include a method of subjecting a hexane solution including lipid from milk, containing triglyceride (TG) and polar lipid, to a silicic acid column to adsorptively remove TG (Japanese Patent Laid-Open No. 1995-173182), and a method of dissolving a phospholipid fraction derived from milk in ether to separate each phospholipid component with a hexane/methanol/water mixture as an eluent using a simulated moving bed type chromatographic separator filled with silica gel (Japanese Patent Laid-Open No. 1993-132490).

Furthermore, ganglioside, which is sphingolipid from milk, is extracted by, for example, a method of adjusting an ethanol concentration in a stepwise fashion to obtain a. concentrate from ganglioside-containing powder such as butter serum (Japanese Patent Laid-Open No. 2000-234001).

Methods of extracting polar lipid by a supercritical fluid include a method comprising the two steps of: initially extracting and removing triglyceride (TG) from soybean flakes through supercritical extraction (temperature of 80°C, pressure of 32 MPa) using carbon dioxide (CO₂); and then adding ethanol as an entrainer at 10% to supercritically extract phospholipid (PL) (temperature of 70°C, pressure of 68.9 MPa) (Journal of Supercritical Fluids, 14, (1999), 87-93). Similarly, a method is also included comprising the two steps of: initially extracting and removing triglyceride (TG) from yolk powder through supercritical extraction (temperature of 45°C, pressure of 41 MPa) using carbon dioxide (CO₂); and then adding 0.5 mol of ethanol as an entrainer to supercritically extract phospholipid (PL) (temperature of 60°C, pressure of 41. 4 MPa) (Journal.of Supercritical Fluids, 30, (2004), 303-313). Furthermore, a method is included comprising the two steps of: initially adding ethanol as an entrainer at 5% to extract and remove triglyceride (TG) through supercritical extraction (temperature of 35°C, pressure of 17.7 MPa) using carbon dioxide (CO₂); and then adding ethanol at 20% to supercritically extract phospholipid (PL) containing polyunsaturated fatty acids (PUFA) such as docosahexaenoic acid (DHA) from fish eggs (temperature of 35°C, pressure of 17.7 MPa) (Journal of Oleo Science, Vol.53, No.9,417-424,(2004)).

Supercritical extraction methods from materials derived from milk containing polar lipids include a method of using whey containing a milk fat globule membrane (MFGM) substance to prepare a concentrate to be powdered, performing supercritical extraction (temperature of 45 to 55°C, pressure of 300 to 500 kg/cm²) using carbon dioxide as a supercritical fluid to remove triglyceride (TG) and cholesterol, and then adding ethanol as an entrainer at 20 to 100% to carbon dioxide to supercritically extract phospholipid (PL) (temperature of 45 to 55°C, pressure of 300 to 500 kg/cm²) (Japanese Patents Laid-Open No. 1995-87886 and No. 2005-336230; Journal of Dairy Science, Vol. 53, 86, (2003), 2297-2307).

In addition, a method using butter serum powder rich in a milk fat globule membrane (MFGM) substance is included comprising initially using carbon dioxide as a supercritical fluid to perform supercritical extraction (temperature of 40 to 80°C, pressure of 25 MPa) to remove triglyceride (TG) and cholesterol, and then extracting phospholipid through subcritical extraction using carbon dioxide (temperature of 304.2 to 374 K, pressure of 73.2 bar or higher) or subcritical extraction using dimethyl ether (temperature of 273 to 373 ·K, pressure of 10 bar or higher) (WO2006/041316).

### DISCLOSURE OF INVENTION

In the above-described supercritical extraction methods frommaterials derived frommilk containingpolar lipids, however, triglyceride (TG) or cholesterol cannot be completely removed in a first step, and the extract obtained through the subsequent supercritical extraction with ethanol added as an entrainer contains about 50% of triglycerides (TG), but no extract containing 100% of polar lipids such as phospholipids (PL) or sphingolipids has been obtained. In addition, the composition/content of each phospholipid in an extract has not been shown.

Soybean flakes and yolk powder have been also used as raw materials to prepare phospholipid through supercritical extraction with ethanol added as an entrainer, but its extraction rate is considered to greatly depend on the state of starting materials, the compositions of lipids and their fatty acids, and ingredients such as mixed proteins: Accordingly, since milk materials containing polar lipids derived from fat globule membrane ingredients contain conjugated proteins such as glycoprotein, and specific ingredients such as phospholipid, sphingolipid, cholesterol, and neutral fat, which have specific interactions such as complex formation, it has been.extremely difficult to set an optimal condition for supercritical extraction in light of supercritical conditions using soybean flakes or egg yolk powder.

Thus, the object of the present invention is to provide a composition richly containing polar lipid, containing little triglyceride (TG) and/or cholesterol, which contains a high content of polar lipid such as phospholipid (PL) and sphingolipid prepared from raw materials derived from milk, using a supercritical extraction technology to solve the above-described problems with conventional technologies.

As a result of pursuing extensive research on a method of efficiently preparing a composition richly containing polar lipid derived from milk in order to solve the above-described problems, the present inventor arrived at the present invention in finding that a composition that contains little triglyceride (TG) and/or cholesterol and richly contains polar lipid such as phospholipid (PL) and sphingolipid can be provided by performing supercritical extraction with carbon dioxide used as a supercritical fluid and ethanol added as an entrainer at an ethanol concentration and/or extraction temperature adjusted in a stepwise fashion.

Thus, the present invention provides a composition richly containing polar lipid derived from milk, wherein the total content of triglyceride (TG) and cholesterol.is 5% or less and the content of polar lipid is 95% or more in the total solid, and a manufacturing method thereof comprising performing supercritical extraction with carbon dioxide used as a supercritical fluid and ethanol added as an entrainer at an ethanol concentration and/or extraction temperature adjusted in a stepwise fashion.

Most of triglyceride (TG) and cholesterol is removed from materials derived from milk containing polar lipid by initially adding ethanol with respect to the total amount of ethanol and carbon dioxide, so that an ethanol concentration is 1 to 10% (v/v), preferably less than 10% .(v/v), to perform supercritical extraction at an extraction pressure of 7.4 MPa or higher and an extraction temperature ranging from 31 to 45°C, preferably 32 to 44 °C. Next, a polar lipid composition containing phosphatidylcholine (PC) and sphingolipid such as sphingomyelin (SM), glucosylceramide (GlcCer), and lactosylceramide (LacCer) as the main components can be obtained by adding ethanol, so that an ethanol concentration is 10 to 25% (v/v), to perform supercritical extraction at an extraction temperature ranging from 31 to 45°C, preferably 32 to 44 °C. Furthermore, a polar lipid composition containing phosphatidylethanolamine (PE) as the main component can be obtained at the same ethanol concentration and an extraction temperature increased to 45 to 75°C. Then, a polar lipid composition containing phosphatidylserine (PS) and phosphatidylinositol (PI) as the main components can be obtained by maintaining an extraction temperature at 45 to 75°C and increasing an ethanol concentration to 25 to 60%. An ethanol concentration, as used herein, refers to the volume percent of ethanol to the total amount of the ethanol and carbon dioxide. A combination of polar lipid compositions obtained by these processes in the respective steps also provides a composition richly containing polar lipid derived milk, which contains little triglyceride (TG) or cholesterol.

The invention allows efficient production of a composition containing little triglyceride (TG) and/or cholesterol and richly containing polar lipid such as phospholipid (PL) and sphingolipid, which has been difficult to be provided by conventional supercritical extraction methods, and further fractionation of some polar lipids. Compositions richly containing polar lipid derived from milk, provided by a manufacturing method according to the present invention, may be widely used in the fields of-: food products such as functional foods, breastmilk substitutes, and high density liquid diets; pharmaceuticals such as enteral nutrients and substrates for drug delivery systems; animal feed for domestic/companion animals and cultured fish; as well as cosmetics and chemical products.

### BEST MODES FOR CARRYING OUT THE INVENTION

As used herein, "composition richly containing polar lipid derived from milk" means a composition containing a high concentration of polar lipid such as phospholipid or sphingolipid included in milk. Phospholipid (PL) included in milk refers to glycerophospholipid such as phosphatidylcholine (PC), phosphatidylethanolamine (PE), phosphatidylserine (PS), phosphatidylinositol (PI), plasmalogen-type phosphatidylethanolamine or plasmalogen-type phosphatidylcholine; and sphingophospholipid such as sphingomyelin (SM). Sphingolipid refers to sphingophospholipid such as sphingomyelin (SM); and sphingoglycolipid such as glucosylceramide (GlcCer), lactosylceramide (LacCer) or ganglioside.

Materials derived from milk containing polar lipids to be used as raw materials in the, production according to the present invention refer to, but are not particularly limited to, dry matters, (powders) containing fat globule membrane ingredients. These dry matters include, for example, butter serum powder and its concentrate or separated matter; buttermilk powder and its concentrate or separated matter; whole milk powder; a whey protein concentrate (WPC); and the concentrate or separated matter of a fat globule membrane, wherein, without any particular limitation, the extraction efficiency in production is better at a higher fat content or a lower lactose content, and wherein the fat globule membrane concentrate, the butter serum concentrate, and the buttermilk concentrate are preferably used.

Milk, as used herein, is one derived from mammals such as cow, goat, sheep, horse, or human; wherein, without any particular limitation, from the viewpoint of industrial production, materials from the milk of cow, goat, or sheep are preferably used, and the cow's milk is most preferably used.

The characteristics of the method of manufacturing a composition richly containing polar lipid derived from milk according to the present invention and of the composition are described in detail below.

The content of polar lipid such as phospholipid or sphingolipid in butter serum powder is about 5% (W/W), which is about 10 times higher than that in buttermilk powder. This butter serum, which is a by-product generated in the production of AMF (anhydrous milk fat; so-called butter oil), is an aqueous phase exhausted when a cream with 40 to 50% of fat obtained from raw milk by centrifugation is further centrifuged to prepare a high-fat cream with 60 to 80% of fat and its phase is inverted by heat and shear treatments, and differs from a buttermilk by-produced in butter production. Such butter serum powder, as thus prepared, may be used for raw materials. More preferably, a powdered concentrate may be used which is produced by treating the resultant butter serum with a micro filtration membrane (MF) or an ultrafiltration membrane (UF) to concentrate lipids and proteins (see W02002/34062 and WO2008/009636). A concentrate may be also used which is obtained by removing some proteins included in the butter serum by isoelectric precipitation, followed by being treated with a micro filtration membrane (MF) or an ultrafiltration membrane (UF) (see Japanese Patent Laid-Open No. 2007-89535).

These concentrates can be powdered by a spray dryer which is generally utilized in milk treatment, but may also be powdered using a drying method such as freeze or vacuum drying.

Particularly preferred is a supercritical extraction process using a butter serum concentrate powder containing 20 to 70% of total fat and 10 to 40% of polar lipid as raw materials.

The process is a manufacturing method comprising performing supercritical extraction with carbon dioxide used as a supercritical fluid and ethanol added as an entrainer at an ethanol concentration and/or extraction temperature adjusted in a stepwise fashion. It is noted that extraction operation is preferably performed at a constant extraction pressure in light of extraction efficiency, but the extraction pressure may be also regulated at appropriate times.

Initially, in a first step, most of triglyceride (TG) and cholesterol is removed by adding ethanol, such that the ethanol concentration is 1 to 10% (v/v), preferably less than 10% (v/v) to perform supercritical extraction at an extraction pressure of 7.4 MPa or higher and an extraction temperature ranging from 31 to 45°C, preferably 32 to 44 °C. Although triglyceride (TG) can be removed without any ethanol added, treatment efficiency is reduced, e.g., a longer treatment time taken, and no sterol such as cholesterol can be removed completely. The preferable ethanol concentration is about 3 to 8%. At 10%, phosphatidylcholine (PC) is slightly extracted and removed. In addition, since a significant increase in an extraction rate can be hardly seen at a high extraction temperature of higher than 60°C under an extraction pressure of 50 MPa or less, treatment at a temperature of 35 to 45°C is preferred under a pressure range from 15 to 50 MPa. In contrast, in a high-pressure treatment at an extraction pressure of higher than 50 MPa, an extraction rate is significantly increased at 60°C or higher, but treatment at 35 to 45°C is preferred in light of the optimal temperature of the subsequent extraction process and the occurrence of thermal denaturation. This treatment allows the removal of about 100% of triglyceride and 95% or higher of sterols such as cholesterol.

Next, in a second step, a polar lipid composition containing phosphatidylcholine (PC) and sphingolipid such as sphingomyelin (SM), glucosylceramide (GlcCer), and lactosylceramide (LacCer) as the main components can be obtained by adding ethanol, such that the ethanol concentration is 10 to 25% (v/v), to perform supercritical extraction at an extraction temperature ranging from 31 to 45°C, preferably 32 to 44 °C. The preferable ethanol concentration is about 15 to 25%. At 15% or lower, the extraction rates of phosphatidylcholine (PC) and sphingomyelin (SM) decrease. In addition, since a significant increase in an extraction rate can be hardly seen at a high extraction temperature of higher than 60°C under an extraction pressure' of 50 MPa or less, treatment at a temperature of 35 to 45°C is preferred under a pressure range from 15 to 50 MPa. In contrast, in a high-pressure treatment at an extraction pressure of higher than 50 MPa, the extraction temperature of 35 to 45°C is also preferable, but that of higher than 60°C is not preferable because the extraction rates of phosphatidylcholine (PC) and sphingomyelin (SM) decrease and that of phosphatidylethanolamine (PE) increases. It is noted that an ethanol concentration can be reduced to 10 to 20% in a high-pressure treatment at an extraction pressure of higher than 50 MPa. This treatment provides an extract containing little sterol such as triglyceride or cholesterol, wherein the rate of phosphatidylcholine (PC) is 45% or more and that of sphingomyelin (SM) is 30% or more with respect to the total fat.

Furthermore, in a third step, a polar lipid composition containing phosphatidylethanolamine (PE) as the main component can be obtained at the same ethanol concentration and an extraction temperature increased to 45 to 75°C. The preferable ethanol concentration is about 15 to 25%. Treatment is preferably performed at 55 to 70°C at an extraction pressure of 50 MPa or lower, particularly 15 to 50 MPa. In contrast, in a high-pressure treatment at an extraction pressure of higher than 50 MPa, the extraction temperature may be decreased to 50 to 65°C. This treatment provides an extract containing about 100% of polar lipid, phosphatidylethanolamine (PE) of 60% or more with respect to the total fat, sphingomyelin (SM), phosphatidylserine (PS), phosphatidylinositol (PI), etc.

Furthermore, in a fourth step, a polar lipid composition containing phosphatidylserine (PS) and phosphatidylinositol (PI) as the main components can be obtained by maintaining the extraction temperature at 45 to 75°C and increasing then ethanol concentration to 25 to 60%. The preferable ethanol concentration is about 30 to 55%. Treatment is preferably performed at 55 to 70°C at an extraction pressure of 50 MPa or lower, particularly 15 to 50 MPa. In contrast, in a high-pressure treatment at an extraction pressure of higher than 50 MPa, the extraction temperature may be decreased to 50 to 65°C. This treatment provides an extract containing about 100% of polar lipid, phosphatidylserine (PS) of 35% or more and phosphatidylinositol (PI) of 25% or more with respect to the total fat, phosphatidylethanolamine (PE), etc.

A combination of these extracts obtained in the second to fourth steps also provides a composition richly containing polar lipid derived from milk, which contains little triglyceride (TG) or cholesterol.- Powders following an extraction process contain little lipid, and can be provided as a composition with a fat globule membrane protein highly concentrated.

### EXAMPLES

The present invention is more specifically described in the following examples, which are not to be construed as limiting the technological scope of the present invention.

### Example 1

### 1. Preparation of butter serum concentrate powder

A micro filtration membrane (MF) with a pore size of 0.1 µm was used to concentrate a butter serum by-produced in manufacturing AMF from high-fat cream, and the fluid concentrate was subjected to spray drying to prepare butter serum concentrate powder (hereinafter referred to as concentrate powder).

The total fat content in 100 g of the concentrate powder was 38 g, consisting of 14 g of sterols such as triglyceride and cholesterol, 19 g of glycerophospholipid and sphingophospholipid, and 5 g of other polar lipids such as sphingoglycolipid. The content of each polar lipid was calculated by scraping off each polar lipid ingredient using thin-layer chromatography to perform lipid extraction, followed by determining a phosphorous content using an absorptiometric method.

With 150g of the concentrate powder as raw materials, four-step supercritical extractions were performed, with carbon dioxide used as a supercritical fluid and ethanol added as an entrainer at an ethanol concentration and/or extraction temperature adjusted in a stepwise fashion.

### 2. Extraction and removal of triglyceride (TG) and cholesterol (first step)

In a first step, with ethanol added to the concentrate powder prepared as described above so that the ethanol concentration was 7% (v/v), supercritical extraction was performed at an extraction pressure of 30 MPa and an extraction temperature of 40°C to yield 20.5 g of an extract (as a dry matter with ethanol removed).

In this extraction process, about 98% of sterols such as triglyceride (TG) and cholesterol included in 150 g of the concentrate powder was extracted and removed. In addition, the extract contained no polar lipid such as phospholipid or sphingolipid.

### 3. Extraction of composition containing PC, SM, etc. (second step)

Next, in a second step, ethanol was added to the concentrate powder containing a high concentration of polar lipid obtained by removing triglyceride (TG) and cholesterol from the concentrate powder in the first step, so that the ethanol concentration was 20% (v/v), to perform supercritical extraction at an extraction pressure of 30 MPa and an extraction temperature of 40°C.

14.9 g of a polar lipid extract containing phosphatidylcholine (PC) and sphingolipids such as sphingomyelin (SM), glucosylceramide (GlcCer), and lactosylceramide (LacCer) as the main components could be obtained (as a dry matter with ethanol removed). The extract contained 7.2 g (about 48%) of phosphatidylcholine (PC) and 4.7 g (about 32%) of sphingomyelin (SM).

### 4. Extraction of composition containing PE (third step)

Furthermore, in a third step, supercritical extraction was performed for the concentrate powder containing polar lipid obtained by removing some polar lipids in the second step, at an extraction pressure of 30 MPa, with the ethanol concentration maintained at 20% and the extraction temperature increased to 60°C.

From the concentrate powder containing polar lipid obtained by removing some polar lipids in the second step, 10.7 g of a polar lipid extract containing phosphatidylethanolamine (PE) as the main component could be obtained (as a dry matter with ethanol removed). The extract contained 6.5 g (about 60%) of phosphatidylethanolamine (PE).

### 5. Extraction of composition containing PS and PI (fourth step)

In a final fourth step, supercritical extraction was performed for the concentrate powder containing polar lipid obtained by further removing some polar lipids in the third step, at an extraction pressure of 30 MPa, with an extraction temperature maintained at 60°C and the ethanol concentration increased to 50%.

From the concentrate powder containing polar lipid obtained by further removing some polar lipids in the third step, 8.8 g of a polar lipid extract containing phosphatidylserine (PS) and phosphatidylinositol (PI) as the main components could be obtained (as a dry matter with ethanol removed). This extract contained 3.3 g (about 37%) of phosphatidylserine (PS) and 2.4 g (about 27%) of phosphatidylinositol (PI).

The total amount of the extracts obtained in the steps 2 to 4 was 34.4 g, containing 33.9 g (about 98.5%) of polar lipid. After the supercritical extraction processes, followed by drainage of only supercritical carbon dioxide to completely remove ethanol, in about 95 g of a dried and hardened residual powder, only 2 g (about 2%) of lipid was included, and a fat globule membrane protein content could be increased to about 80% (the protein content was determined by the Kjeldahl method).

### Example 2

### 1. Preparation of whey buttermilk concentrate powder

An ultrafiltration membrane (UF) having a molecular weight cut-off of 10 kDa was used to concentrate whey buttermilk by-produced in manufacturing whey butter from whey cream obtained by centrifuging cheese whey in a whey separator, and the fluid concentrate was subjected to spray drying to prepare whey buttermilk concentrate powder (hereinafter referred to as concentrate powder). The total fat content in the powder is 25%, consisting of 7% of sterols such as triglyceride and cholesterol, 15% of glycerophospholipid and sphingophospholipid, and 2% of other polar lipids such as sphingoglycolipid.

With 100g of the powder as raw materials, supercritical extractions were performed in the following four steps, with carbon dioxide used as a supercritical fluid and ethanol added as an entrainer at an ethanol concentration and/or extraction temperature adjusted in a stepwise fashion.

### 2. Extraction and removal of triglyceride (TG) and cholesterol (first step)

In a first step, with ethanol added to the concentrate powder prepared as described above so that the ethanol concentration was 10% (v/v), supercritical extraction was performed at an extraction pressure of 50 MPa and an extraction temperature of 35°C to yield 7.1 g of an extract.

In this extraction process, about 100%.of 7 g of sterols such as triglyceride (TG) and cholesterol included in 100 g of the concentrate powder was extracted and removed. In addition, the extract contained 0.1 g of phosphatidylcholine (PC).

### . 3. Extraction of composition containing PC, SM, etc. (second step)

Next, in a second step, ethanol was added to the concentrate powder containing a high concentration of polar lipid obtained by removing triglyceride (TG) and cholesterol from the concentrate powder in the first step, so that the ethanol concentration was 25% (v/v), to perform supercritical extraction at an extraction pressure of 50 MPa and an extraction temperature of 35°C.

8.7 g of a polar lipid extract containing phosphatidylcholine (PC) and sphingolipids such as sphingomyelin (SM), glucosylceramide (GlcCer), and lactosylceramide (LacCer) as the main component could be obtained (as a dry matter with ethanol removed). The extract contained 4.1 g (about 47%) of phosphatidylcholine (PC) and 3.5 g (about 40%) of sphingomyelin (SM).

### 4. Extraction of composition containing PE (third step)

Furthermore, in a third step, supercritical extraction was performed for the concentrate powder containing polar lipid obtained by removing some polar lipids in the second step, at an extraction pressure of 50 MPa, with the ethanol concentration maintained at 25% and the extraction temperature increased to 65°C.

From the concentrate powder containing polar lipid obtained by removing some polar lipids in the second step, 4.3 g of a polar lipid extract containing phosphatidylethanolamine (PE) as the main component could be obtained (as a dry matter with ethanol removed). The extract contained 3.2 g (about 74%) of phosphatidylethanolamine (PE).

### 5. Extraction of composition containing PS and PI (fourth step)

In a final fourth step, supercritical extraction was performed for the concentrate powder containing polar lipid obtained by further removing some polar lipids in the third step, at an extraction pressure of 50 MPa, with an extraction temperature maintained at 65°C and the ethanol concentration increased to 40%. From the concentrate powder containing polar lipid obtained-by further removing some polar lipids in the third step, 3.6 g of a polar lipid extract containing phosphatidylserine (PS) and phosphatidylinositol (PI) as the main components could be obtained (as a dry matter with ethanol removed). The extract contained 1.7 g (about 47%) of phosphatidylserine (PS) and 1. 3 g (about 36%) of phosphatidylinositol (PI). The total amount of the extracts obtained in the steps 2 to 4 was 16.6 g, of which about 99% was polar lipid.

### INDUSTRIAL APPLICABILITY

The present invention provides a composition richly containing polar lipid derived from milk, wherein the total content of triglyceride (TG) and cholesterol is 5% or less and the content of polar lipid is 95% or more in the total solid, and a manufacturing method thereof comprising performing supercritical extraction with carbon dioxide used as a supercritical fluid and ethanol added as an entrainer at an ethanol concentration and/or extraction temperature adjusted in a stepwise fashion; and allows industrially stable production. Compositions richly containing polar lipid derived from milk, provided by the manufacturing method according to the present invention, may be widely used in the fields of: food products such as functional foods, breastmilk, substitutes, and high density liquid diets; pharmaceuticals such as enteral nutrients and substrates for drug delivery systems; animal feed for domestic/companion animals and cultured fish; as well as cosmetics and chemical products.

## Claims

1. A method of manufacturing a composition richly containing polar lipid such as phospholipid (PL) and sphingolipid, which contains little triglyceride (TG) or cholesterol, from materials derived from milk containing polar lipids such as phospholipid (PL) and sphingolipid, comprising performing supercritical extraction with carbon dioxide used as a supercritical fluid and ethanol added as an entrainer at an ethanol concentration and/or extraction temperature adjusted in a stepwise fashion.

2. The method according to claim 1, wherein, in a supercritical extraction process, ethanol is initially added, so that an ethanol concentration is 1 to 10% (v/v), to perform supercritical extraction at an extraction pressure of 7.4 MPa or higher and an extraction temperature ranging from 31 to 45°C to remove most of triglyceride (TG) and cholesterol, and ethanol is then added, so that an ethanol concentration is 10 to 25% (v/v), to perform supercritical extraction at an extraction temperature ranging from 31 to 45°C to prepare the composition richly containing polar lipid.

3. The method according to claim 1, wherein, after the supercritical extraction process according to claim 2, supercritical extraction is performed at the same ethanol concentration and an extraction temperature increased to 45 to 75°C to prepare the polar lipid composition

4. The method according to claim 1, wherein, after the supercritical extraction process according to claim 3, supercritical extraction is performed by maintaining an extraction temperature at 45 to 75°C and further increasing an ethanol concentration to 25 to -60% (v/v) to prepare the polar lipid composition.

5. A method of manufacturing a composition richly containing polar lipid such as phospholipid (PL) and sphingolipid, comprising the steps of:
i) adding ethanol as an entrainer, so that an ethanol concentration is 1 to 10% (v/v), to perform supercritical extraction with carbon dioxide from materials derived milk containing polar lipid such as phospholipid (PL) and sphingolipid, at an extraction pressure of 7.4 MPa or higher and an extraction temperature ranging from 31 to 50°C;
ii) adding ethanol as an entrainer, so that an ethanol concentration is 10 to 25% (v/v), to perform supercritical extraction with carbon dioxide at an extraction temperature ranging from 31 to 45°C;
iii) performing supercritical extraction with carbon dioxide with ethanol added as an entrainer at the same ethanol concentration and an extraction temperature increased to 45 to 75°C; and
iv) performing supercritical extraction with carbon dioxide with ethanol added as an entrainer at the same extraction temperature and an ethanol concentration increased to 25 to 60%, wherein the composition richly containing polar lipid contains little triglyceride (TG) or cholesterol.

6. A polar lipid composition manufactured by the method according to any one of claims 2 to 5.

7. A polar lipid composition with a polar lipid constitution adjusted by appropriately mixing two or more of polar lipid compositions manufactured by the method according to any one of claims 2 to 5.
